# NEUE EUROPÄISCHE PATENTSCHRIFT

(11) **EP 1 304 760 B2**
(45) Veröffentlichungstag und Bekanntmachung des Hinweises auf die Entscheidung über den Einspruch: **19.10.2011**
(45) Hinweis auf die Patenterteilung: 06.06.2007
(21) Anmeldenummer: 02018815.7
(22) Anmeldetag: 23.08.2002
(51) Int. Cl.: H01M 10/50

(54) **Akkumulatorenbatterie**
Storage battery
Accumulateur électrique

(30) Priorität: 18.10.2001 DE 10151604
(43) Veröffentlichungstag der Anmeldung: 23.04.2003
(73) Patentinhaber: VARTA Automotive Systems GmbH, 30419 Hannover (DE)
(72) Erfinder: Hoh, Markus, 48431 Rheine (DE)
(74) Vertreter: Lins, Edgar

(56) Entgegenhaltungen:
- EP-A- 0 639 867
- EP-A- 0 834 952
- EP-A2- 0 940 864
- WO-A1-00/38255
- DE-A1- 4 029 901
- DE-A1- 10 055 158
- DE-A1- 10 056 370
- US-A- 5 015 545
- US-A- 5 663 007

## Beschreibung

Die Erfindung betrifft eine Akkumulatorenbatterie mit mehreren elektrochemischen Speicherzellen, die in einem gemeinsamen Batteriekasten angeordnet sind, mit zwischen den Speicherzellen vorgesehenen spaltförmigen Zwischenräumen für ein Kühlmedium.

Beim Betrieb von Akkumulatorenzellen, die in einem Batterieverbund arbeiten und die in einem gemeinsamen Batteriekasten untergebracht sind, kann die unvermeidbare Verlustwärme zu einer erheblichen Aufheizung des Systems führen. Es können dabei Temperaturwerte erreicht werden, die eine Beschädigung der Zellenbauteile, gegebenenfalls auch der aktiven Materialien nach sich ziehen, zumindest aber merkliche Veränderungen des elektrischen Verhaltens der Zellen auslösen können. Aus diesem Grunde ist die Kühlung eines solchen Aggregates unerlässlich.

Es treten besonders dann Unstimmigkeiten im Zusammenspiel der Zellen - bei größeren Batterieverbänden entsprechend auch der Module - auf, wenn deren Kühlung nicht gleichmäßig erfolgt. Wegen der Temperaturabhängigkeit der Stromaufnahme und Stromabgabe besitzen ungleichmäßig gekühlte Zellen unterschiedlich große Kapazitäten und beenden insofern nicht alle zum gleichen Zeitpunkt die Entladung.

Bei den in einem großen Behälter oder Batteriekasten untergebrachten Zellen, wie es insbesondere bei Antriebsbatterien für Elektrofahrzeuge der Fall ist. Erfolgt die Kühlung nur in untergeordnetem Maße durch Wärmestrahlung; vielmehr müssen die Zellen durch erzwungene Konvektion mittels eines Kühlmittelstrom, vorzugsweise eines Luftstromes gekühlt werden. Damit das Kühlmittel an die einzelnen Zellen oder Zellmodule herangeführt werden kann, werden diese im Behälter mit Abstand voneinander montiert. Dabei müssen Form und Ausstattung des Behälters, Eintritts- und Austrittsöffnung für die Kühlluft und die vorhandenen Ventilatoren den Anforderungen an die Kühlleistung entsprechen.

Bei den meisten bekannten Kühleinrichtungen, die für einen größeren Zellenverband ausgelegt sind, mangelt es jedoch an einer gleichmäßigen Kühlleistung für die einzelnen Zellen. Üblicherweise wird die Kühlluft an einer größeren Reihe von Zellen entlanggeführt, wobei die in der Reihenfolge vorn liegenden Zellen mit frischem, die nachfolgenden Zellen mit bereits erwärmtem Kühlmedium in Kontakt kommen. Dadurch ist auch die Durchschnittstemperatur bei den in der Reihenfolge vorn liegenden Zellen niedriger als bei den nachgeordneten.

Die Kühlleistung ist also, entsprechend der Anordnung der Zelle im Luftstrom, gestaffelt. Die Staffelung der Kühlleistung fällt um so linearer aus, je exakter das Kühlmedium von Zelle zu Zelle geführt wird. Gleiches gilt für die Staffelung der sich an den Zellen einstellenden Durchschnittstemperaturen.

Wie beispielsweise aus dem Dokument DE 4029018 A1 bekannt, lässt sich durch Verzweigung der Kühlluftströme die Ungleichmäßigkeit der Kühlwirkung verringern; sie lässt sich aber nicht ausschließen. Wenn die Kühlmittelströmung parallel zu der Längsachse der Zellenmodule verläuft, stellt sich auch ein Temperaturgradient in dieser Richtung ein. Solange Zellen nacheinander von dem selben Kühlmittel angeströmt werden, wird sich eine ungleichmäßige Temperaturverteilung ergeben.

Dieses Konzept wird auch bei den verschiedenen Maßnahmen zur Wärmeabfuhr aus einer Hochenergiebatterie gemäß dem Dokument DE 4029901 A1 verfolgt.

Gemäß den Druckschriften EP 0918358 A1 und EP 0964470 A1 kann eine gleichmäßigere Wärmeabfuhr an den Zellen durch eine teilweise wärmedämmende Abschottung der Batterieoberfläche von besser gekühlten Zellen und eine Beschleunigung des Kühlmittelstroms bei schlechter gekühlten Zellen erreicht werden.

Im Dokument DE 2835501 C2 wird eine gleichmäßige Kühlung der Zellmodule dadurch erreicht, dass zwischen den Modulen Zwischenräume als Kühlmittelkanäle vorgesehen sind, der Zuführungskanal einen sich stromab verjüngenden Querschnitt und der Sammelkanal für das erwärmte Kühlmedium einen sich stromab erweiternden Querschnitt aufweist.

Nach dem Dokument DE 4116253 A1 wird ein ähnliches Kühlverfahren angewendet, bei dem durch eine treppenförmigen Anordnung der einzelnen Zellen der Luftstrom so verzweigt wird, dass jede Zelle mit einem Teilstrom frischen Kühlmediums versorgt wird. Da an jedem Luftkanal der gleiche Strömungswiderstand herrscht, fließen an allen Zellen gleiche Volumenströme und es liegen gleiche Kühlbedingungen vor.

Gemäß der Druckschrift US 5015545 wird der gleiche Effekt durch Schrägstellung zweier Reihen von übereinander angeordneten prismatischen Zellmodulen erreicht. Durch den sich verengenden Luftspalt zwischen den Modulreihen wird die Geschwindigkeit der Luftströme umgekehrt proportional zur Temperaturerhöhung gesteigert; dadurch wird eine gleichmäßige Kühlleistung für die einzelnen Zellen realisiert.

Dem Dokument DE 10064648 A1 ist einerseits der Aufbau gemäß der Druckschrift DE 2835501 A1 zu entnehmen. Andererseits wird eine Anordnung der Zellen bzw. der in Reihe montierten Zellmodule in Reusenform vorgeschlagen. Der Innenraum der Reuse bildet den Zuführungskanal für das Kühlmedium.

Die beschriebenen Konstruktionen erfordern große Zuführungskanäle. Das damit verbundene große Volumen der Akkumulatorenbatterie ist nicht für jede Anwendung akzeptabel, weil dadurch der auf das Bauvolumen bezogene Energieinhalt abgesenkt wird.

Im Dokument EP 0639867 A1 wird eine gleichmäßige Temperatur der Zellmodule durch eine Umkehrkühlung erreicht. Der dafür notwendige Einbau schwenkbarer Ventilatoren oder umschaltbarer Kühlmittelkanäle macht die Lösung aufwändig und teuer.

Im Dokument EP 0 940 864 A2 wird ein Batteriepack-Kühlungssystem beschrieben.

Der Erfindung liegt die Aufgabe zugrunde, bei der Kühlung von Akkumulatorbatterien eine Vergleichmäßigung der Kühlung zu erreichen.

Die Aufgabe wird erfindungsgemäß bei einer Akkumulatorenbatterie der eingangs genannten Gattung durch die kennzeichnenden Merkmale des Anspruchs 1 gelöst. In den Unteransprüchen sind vorteilhafte Ausgestaltungen der Akkumulatorenbatterie angegeben.

Im Folgenden wird die Erfindung anhand der Figuren näher beschrieben.

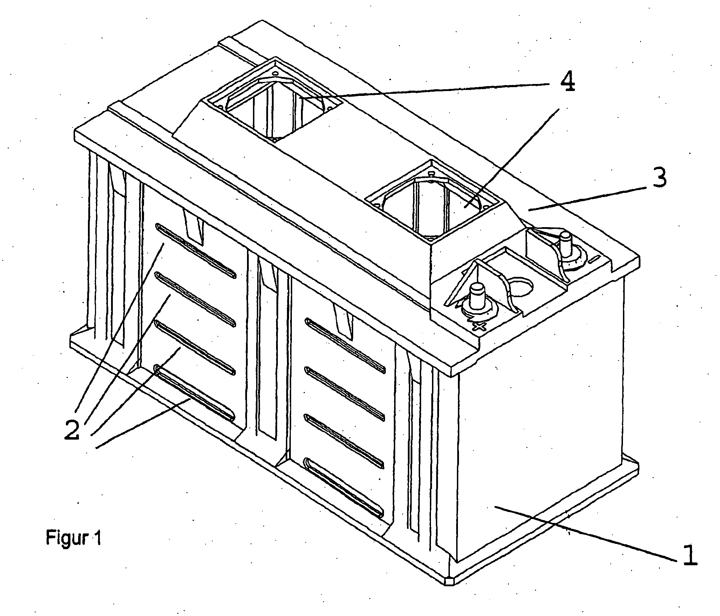

Figur 1 zeigt eine Ansicht der neuen Akkumulatorenbatterie.
Figur 2 zeigt eine Ansicht des Batteriekastens.
Figur 3 zeigt eine Ansicht des Batteriedeckels.

Die erfindungsgemäße Akkumulatorenbatterie, insbesondere eine Nickel/Metallhydrid-Batterie, verfügt über einen Batteriekasten 1, der mehrere übereinander liegende seitliche Eintrittsöffnungen 2 für das Kühlmedium, insbesondere Luft, verfügt. Dadurch werden die Zellen nicht mehr ausschließlich nacheinander oder einzeln vom Kühlmedium angeströmt, da durch die entsprechend gestalteten seitlichen Eintrittsöffnungen 2 bedarfsgerecht frisches Kühlmedium ergänzt wird. Eine weitere Vergleichmäßigung der Temperatur lässt sich durch eine gezielte Steuerung des durch die unteren Eintrittsöffnungen ein- und dann aufwärtsströmenden Anteils des Kühlmediums, z.B. durch eine zusätzliche Platte mit Öffnungen für das Kühlmedium unterhalb der Zellen erreichen.

Der Batteriekasten 1 und der Batteriedeckel 3 werden vorzugsweise aus einem schlagfesten Kunststoff, beispielsweise Polypropylen, in den für Starterbatterien üblichen genormten Maßen gefertigt. In diesen Batteriekasten werden elektrochemische Speicher, baulich reihenweise neben- und hintereinander angeordnet. Beispielsweise ist eine Vielzahl von Rundzellen in Längsrichtung des Batteriekastens nebeneinander und übereinander unter Freilassung von Zwischenräumen angeordnet. In Längsrichtung können dabei ebenfalls jeweils mehrere Rundzellen hintereinander liegen. Bevorzugt können die elektrochemischen Speicher Nickel/Metallhydrid-Rundzellen mit Wickelelektroden sein, die parallel zu den Längsseiten des Batteriekastens 1 liegend montiert sind. Zwischen den einzelnen Zellen befinden sich spaltförmige Abstände, so dass ihre Gehäuse von einem Kühlmedium umströmbar sind. Es ist besonders vorteilhaft, die an den Außenwänden liegenden Zellen mit nur geringem Abstand oder ohne Abstand zur Außenwand einzubauen.

Als Kühlmedium sind, da sie nur mit den dicht verschlossenen Gehäusen der Zellen in Kontakt kommen, Flüssigkeiten wie Wasser, Öl oder Glykol und Gase geeignet. Bevorzugtes Kühlmittel ist jedoch Luft, die von wenigstens einem Lüfter durch den Batteriekasten 1 gesaugt oder gedrückt wird.

Für den Einbau elektrischer Lüfter bietet sich vorzugsweise ein entsprechend ausgeformter Batteriedeckel 3 des Batteriekastens 1 an. Die Lüfter saugen die Luft durch die seitlichen Eintrittsöffnungen 2 in den Batteriekasten 1 hinein und an den Zellen entlang, und saugen die erwärmte Luft durch Austrittsöffnungen 4 im Batteriedeckel 3 nach außen. Es sind beliebige Formen von Eintrittsöffnungen 2 möglich, die einen zur Austrittsöffnung 4 hin abnehmenden Strom zusätzlichen Kühlmittels bewirken. Dies geschieht durch eine Reduzierung des Verhältnisses vom Anteil der Fläche der Eintrittsöffnung 2 zum Anteil der Außenfläche in Richtung zur Austrittsöffnung 4 hin geschieht. Die Eintrittsöffnungen 2 können unterschiedliche Flächen und/oder unterschiedliche Abstände voneinander besitzen. Hinsichtlich der Stromversorgung der Lüfter ist es besonders günstig, sie der zu kühlenden Batterie zuzuordnen. Wegen des dort zur Verfügung stehenden Gleichstroms wird man Gleichstrommotoren zum Antrieb der Lüfter vorsehen.

An den Längsseiten des Batteriekastens 1 sind die vorzugsweise schlitzförmigen Eintrittsöffnungen 2 für die Kühlluft zu erkennen. Die unterste Eintrittsöffnung 2 für die Kühlluft ist die Hauptöffnung mit der größten Fläche. In den Batteriedeckel sind zwei Austrittsöffnungen 4 integriert, in die vorteilhaft saugende Lüfter eingebaut werden können. Ähnlich einer üblichen Starterbatterie sind bei der Akkumulatorenbatterie Endpole zur Verbindung mit einem elektrischen Versorgungsnetz vorgesehen.

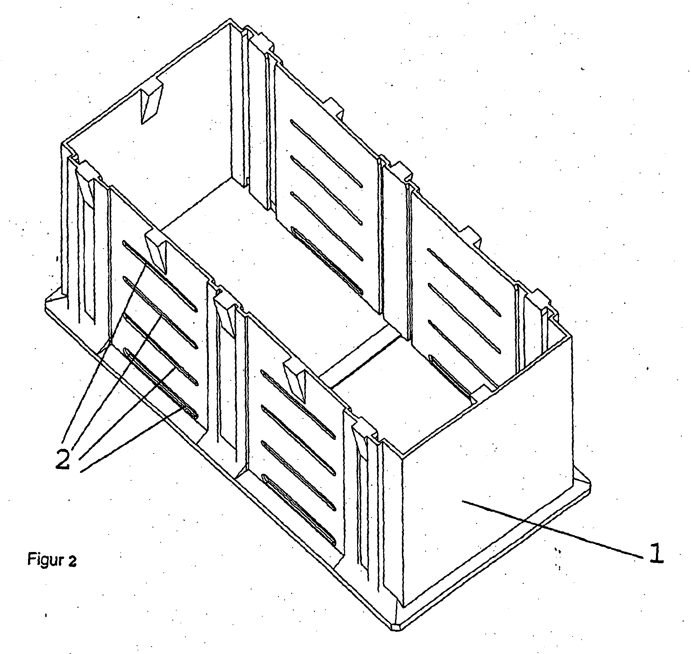

Figur 2 zeigt einen Blick in den offenen neuen Batteriekasten 1, der seitliche Eintrittsöffnungen an wenigstens zwei gegenüberliegenden Seiten aufweist. In der bevorzugten Ausführungsform sind schlitzförmige Eintrittsöffnungen 2 an beiden Längsseiten vorgesehen.

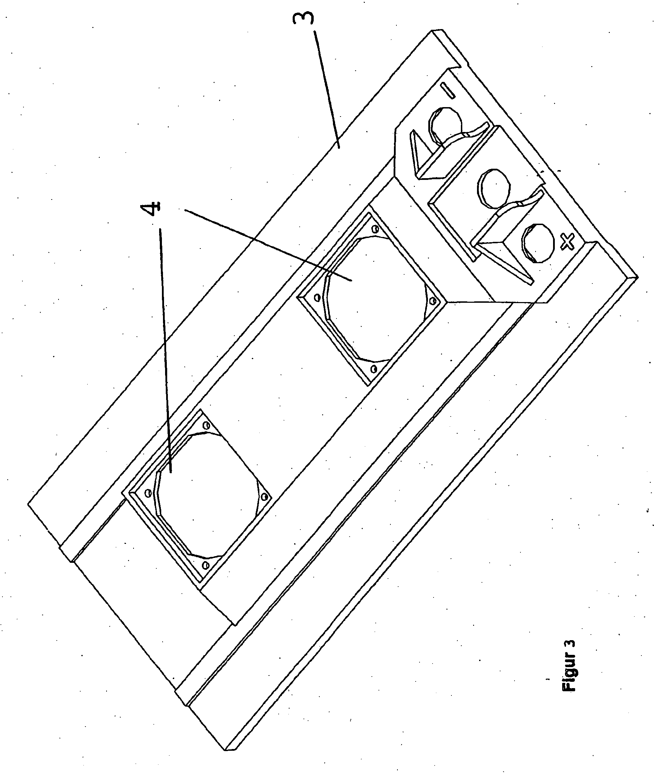

Figur 3 stellt den Batteriedeckel mit zwei Austrittsöffnungen 4 dar, die für den Einbau saugender Lüfter vorbereitet sind. Neben den Öffnungen für die beiden Endpole können auch Öffnungen für zusätzliche Abgriffe zu Versorgungszwecken oder zur Überwachung der Akkumulatorenbatterie in die Konstruktion des Batteriedeckels 3 integriert werden.

## Patentansprüche

1. Akkumulatorenbatterie mit mehreren elektrochemischen Speicherzellen, die in einem gemeinsamen Batteriekasten angeordnet sind, wobei zwischen den Speicherzellen spaltförmige Zwischenräume für ein Kühlmedium bestehen, **dadurch gekennzeichnet, dass** der Batteriekasten (1) mehrere übereinanderliegende seitliche Eintrittsöffnungen (2) für das Kühlmedium aufweist, wobei das Verhältnis vom Anteil der Fläche der Eintrittsöffnung (2) zum Anteil der Außenfläche in Richtung zu einer Austrittsöffnung (4) für das Kühlmedium hin abnimmt.

2. Akkumulatorenbatterie nach Anspruch 1, **dadurch gekennzeichnet, dass** die seitlichen Eintrittsöffnungen (2) unterschiedliche Flächen besitzen.

3. Akkumulatorenbatterie nach Anspruch 1 oder 2, **dadurch gekennzeichnet, dass** die seitlichen Eintrittsöffnungen (2) unterschiedliche Abstände voneinander besitzen.

4. Akkumulatorenbatterie nach einem der Ansprüche 1 bis 3, **dadurch gekennzeichnet, dass** der Batteriekasten (1) seitliche Eintrittsöffnungen (2) an wenigstens zwei gegenüberliegenden Seiten aufweist.

5. Akkumulatorenbatterie nach einem der Ansprüche 1 bis 4, **dadurch gekennzeichnet, dass** das Kühlmedium Luft ist.

6. Akkumulatorenbatterie nach einem der Ansprüche 1 bis 5, **dadurch gekennzeichnet, dass** wenigstens eine Austrittsöffnung (4) in den Batteriedeckel (3) integriert ist.

7. Akkumulatorenbatterie nach einem der Ansprüche 1 bis 6, **dadurch gekennzeichnet, dass** wenigstens ein saugender Lüfter in eine Austrittsöffnung. (4) im Batteriedeckel (3) eingebaut ist.

## Claims

1. Rechargeable battery having a number of electrochemical storage cells, which are arranged in a common battery box, with there being intermediates spaces, in the form of columns, for a cooling medium between the storage cells, **characterized in that** the battery box (1) has a number of side inlet openings (2), which are located one above the other, for the cooling medium, the ratio of the proportion of the area of the inlet opening (2) to the proportion of the external area in the direction of an outlet opening (4) for the cooling medium being reduced.

2. Rechargeable battery as claimed in Claim 1, **characterized in that** the side inlet openings (2) have different areas.

3. Rechargeable battery as claimed in Claim 1 or 2, **characterized in that** the side inlet openings (2) are at different distances from one another.

4. Rechargeable battery as claimed in one of Claims 1 to 3, **characterized in that** the battery box (1) has side inlet openings (2) on at least two opposite sides.

5. Rechargeable battery as claimed in one of Claims 1 to 4, **characterized in that** the cooling medium is air.

6. Rechargeable battery as claimed in one of Claims 1 to 5, **characterized in that** at least one outlet opening (4) is integrated in the battery cover (3) .

7. Rechargeable battery as claimed in one of Claims 1 to 6, **characterized in that** at least one sucking fan is installed in an outlet opening (4) in the battery cover (3).

## Revendications

1. Batterie d'accumulateurs ayant plusieurs cellules électrochimiques dans un caisson de batterie commun, avec des espaces intermédiaires en forme de fente pour un fluide caloporteur entre les cellules, **caractérisée en ce que** le caisson de batterie (1) présente plusieurs orifices d'entrée latéraux superposés (2) pour le fluide caloporteur, le rapport de la proportion de surface de l'orifice d'entrée (2) à la proportion de la surface extérieure diminuant dans la direction d'un orifice de sortie (4) pour le fluide caloporteur.

2. Batterie d'accumulateurs selon la revendication 1, **caractérisée en ce que** les orifices d'entrée latéraux (2) possèdent différentes surfaces.

3. Batterie d'accumulateurs selon la revendication 1 ou 2, **caractérisée en ce que** les orifices d'entrée latéraux (2) sont écartés différemment.

4. Batterie d'accumulateurs selon l'une quelconque des revendications 1 à 3, **caractérisée en ce que** le caisson de batterie (1) présente des orifices d'entrée latéraux (2) sur au moins deux côtés opposés.

5. Batterie d'accumulateurs selon l'une quelconque des revendications 1 à 4, **caractérisée en ce que** le fluide caloporteur est de l'air.

6. Batterie d'accumulateurs selon l'une quelconque des revendications 1 à 5, **caractérisée en ce qu'**au moins un orifice de sortie (4) est intégré dans le couvercle de batterie (3).

7. Batterie d'accumulateurs selon l'une quelconque des revendications 1 à 6, **caractérisée en ce qu'**au moins un ventilateur aspirant est encastré dans un orifice de sortie (4) dans le couvercle de batterie (3).
